# EUROPEAN PATENT SPECIFICATION

(11) **EP 2 840 737 B1**
(45) Date of publication and mention of the grant of the patent: **01.05.2019**
(21) Application number: 12760221.7
(22) Date of filing: 02.05.2012
(51) Int. Cl.: H04L 12/24, H04L 29/06

(54) **METHOD AND APPARATUS FOR CONTROLLING NETWORK DEVICE**
VERFAHREN UND VORRICHTUNG ZUR STEUERUNG EINER NETZWERKVORRICHTUNG
PROCÉDÉ ET APPAREIL DE COMMANDE DE DISPOSITIF DE RÉSEAU

(43) Date of publication of application: 25.02.2015
(73) Proprietor: Huawei Technologies Co., Ltd., Longgang District Shenzhen, Guangdong 518129 (CN)
(72) Inventor: XIA, Yinben, Shenzhen Guangdong 518129 (CN); LI, Fengkai, Shenzhen Guangdong 518129 (CN)
(74) Representative: Epping - Hermann - Fischer
(86) International application number: PCT/CN2012/074963
(87) International publication number: WO 2012/126413

(56) References cited:
- WO-A1-2010/088967
- CN-A- 101 102 259
- CN-A- 101 931 561
- JP-B2- 4 455 520
- US-A- 5 950 195
- US-A1- 2009 164 649
- US-B1- 6 728 885
- ABDELKADER LAHMADI ET AL: "SecSip: A stateful firewall for SIP-based networks", INTEGRATED NETWORK MANAGEMENT, 2009. IM '09. IFIP/IEEE INTERNATIONAL SYMPOSIUM ON, IEEE, PISCATAWAY, NJ, USA, 1 June 2009 (2009-06-01), pages 172-179, XP031499095, ISBN: 978-1-4244-3486-2
- B. FALCHUK ET AL: "An open service platform for deploying and managing services at network edges", 2003 IEEE CONFERENCE ONOPEN ARCHITECTURES AND NETWORK PROGRAMMING., 1 January 2003 (2003-01-01), pages 77-86, XP055166051, DOI: 10.1109/OPNARC.2003.1196375 ISBN: 978-0-78-037764-6

## Description

### TECHNICAL FIELD

The present invention relates to the field of communication and, in particular, to a method and an apparatus for controlling a network device.

### BACKGROUND

With the continuous development of network technologies, network bandwidth traffic becomes heavier and heavier; however, profit per bit gets lower and lower, and operators are gradually turning into pipe providers. It is an urgent need for the operators to have the capacity of sharing profits with the Internet content provider (full name in English: Internet Content Provider, ICP for short) and the Internet service provider (full name in English: Internet Service Provider, ISP for short); and refined operation on network is one of approaches for the operators to improve the capacity of realizing profit sharing.

Generally, many services may be deployed on an open service platform corresponding to one network device simultaneously, the existing open service platform only analyzes and counts the services, but does not make any judgment or modification to data and control instructions, There may exist malicious services and services with imperfect logic. These services may conduct error control on the network device, thereby causing disastrous consequences on the network device.

Document "GENERALIZED SECURITY POLICY MANAGEMENT SYSTEM AND METHOD" (Edward B. Stockwell et al, US 5,950,195 A) discloses a system and method for regulating the flow of internetwork connections through a firewall having a network protocol stack which includes an Internet Protocol (IP) layer (See Abstract).

Document "A MULTIPLE ACCESS SYSTEM" (STENFELT, John et al, WO 2010/088967 A1) discloses a Packet Data Network Gateway, a PDN-GW, which is arranged to receive and forward packet data of at least a first and a second service flow in both an uplink and a downlink direction, with a first access network of a first kind being used for the first service flow and a second access network of a second kind being used for the second service flow (See Summary, lines 24 to 29).

Document "SYSTEM AND METHOD FOR NETWORK ACCESS CONTROL USING ADAPTIVE PROXIES" (Kevin R. Taylor, Ganesh Murugesan et al, US 6,728,885 B1) discloses a method, system and computer program for providing multilevel security to a computer work, where the method comprises the step of receiving a first communication packet on at least one network interface port from an outside network and further includes the steps of filtering the first packet in one of at least two levels of security (See Abstract).

Document "SecSip: A Stateful Firewall for SIP-based Networks" (INTEGRATED NETWORK MANAGEMENT, 2009. IM' 09. IFIP/IEEE INTERNATIONAL SYMPOSIUM ON, IEEE, 1 June 2009 (2009-06-01), pages 172-179, XP031499095) discloses an original security management approach based on a specific vulnerability aware SIP stateful firewall, where the proposed SecSip architecture that integrates four major components: Input/Output Layer, Stateful Inspection Layer, SIP Packet Handler and Rule Compiler and Optimizer (See Abstract, Fig 2 in ARCHITECTURE AND COMPONENTS). Document "ACCESS CONTROL UNIT" (KAWATO, Masahiro, US2009/0164649 A1) discloses an access control proxy which upon receiving an access request, determines whether the request is permitted or denied by matching a rule in an access control database (See Abstract).

### SUMMARY

Accordingly, embodiments of the present invention provide a method and an apparatus for controlling a network device, which can be applied to open network device architecture.

In one aspect, embodiments of the present invention provide a method for controlling a network device, including: intercepting, by an apparatus for controlling the network device, a first control instruction packet sent to a network device; acquiring, by an apparatus for controlling a network device, a service identifier ID corresponding to the first control instruction packet; judging, by the apparatus for controlling a network device, whether the
service corresponding to the first control instruction packet is an authorized service according to whether the acquired service ID is in a list of authorized services; if no, preventing, by the apparatus for controlling the network device, the first control instruction packet from being sent to the network device; if yes, traversing, by the apparatus for controlling the network device, a global control instruction list to judge whether the first control instruction packet has ever been sent, where the global control instruction list is a list comprising sent control instruction packets; if no, storing, by the apparatus for controlling the network device, the first control instruction packet into the global control instruction list, and sending the first control instruction packet to the network device; if yes, judging, by the apparatus for controlling the network device, whether the service corresponding to the first control instruction packet on the network device is in conflict with a service corresponding to a second control instruction packet on the network device; wherein the second control instruction has been intercepted prior to the first control instruction packet; if no, sending, by the apparatus for controlling the network device, the first control instruction packet to the network device; if yes, comparing priority of the first control instruction packet with priority of the second control instruction packet, and preventing, by the apparatus for controlling the network device, the first control instruction packet from being sent to the network device, if the priority of the first control instruction packet is lower than the priority of the second control instruction packet; sending, by the apparatus for controlling the network device, the first control instruction packet to the network device, if the priority of the first control instruction packet is not lower than the priority of the second control instruction packet.

In another aspect, embodiments of the present invention provide an apparatus for controlling a network device, the apparatus includes a data storage unit, a conflict judging module, an authentication module, a forwarding module, a priority judging module and a control module; the data storage unit is configured to store an intercepted first control instruction packet sent to the network device; wherein the authentication module is further configured to acquire a service identifier ID corresponding to the first control instruction packet; judge whether the
service corresponding to the first control instruction packet is an authorized service according to whether the acquired service ID is in a list of authorized services; if no, the control module is configured to prevent the first control instruction packet from being sent to the network device; if yes, traverse a global control instruction list to judge whether the first control instruction packet has ever been sent, where the global control instruction list is a list comprising sent control instruction packets; if no, the data storage unit is further configured to store the first control instruction packet into the global control instruction list and the forwarding module is configured to forward the first control instruction packet to the network device; if yes, the conflict judging module is configured to judge whether the service corresponding to the first control instruction packet on the network device is in conflict with a service corresponding to a second control instruction packet on the network device; wherein the second control instruction has been intercepted prior to the first control instruction packet; if no, the forwarding module is configured to forward the first control instruction packet to the network device; if yes, the priority judging module is configured to compare priority of the first control instruction packet with priority of the second control instruction packet; the control module is configured to prevent the first control instruction packet from being sent to the network device, if the priority of the first control instruction packet is lower than the priority of the second control instruction packet; the forwarding module is configured to forward the first control instruction packet to the network device, if the priority of the first control instruction packet is not lower than the priority of the second control instruction packet.

According to the technical solutions of embodiments of the present invention, the following technical effects can be achieved: accuracy of service processing and control can be ensured, and error control caused by malicious services and services with imperfect logic on the network device can be prevented. Therefore, the accuracy and validity of the control caused by an open service system on the network device are ensured so that the network device is robust and secure.

### BRIEF DESCRIPTION OF DRAWINGS

FIG. 1 is a flow chart of a method according to an embodiment of the present invention;
FIG. 2a is a sub-flow chart of a method according to an embodiment of the present invention;
FIG. 2b is a sub-flow chart of a method according to an embodiment of the present invention;
FIG. 3a is a sub-flow chart of a method according to an embodiment of the present invention;
FIG. 3b is a sub-flow chart of a method according to an embodiment of the present invention;
FIG. 4 is a schematic networking diagram according to an embodiment of the present invention;
FIG. 5a is schematic diagram of a configuration file according to an embodiment of the present invention;
FIG. 5b is schematic diagram of a configuration file according to an embodiment of the present invention;
FIG. 6 is a schematic diagram of a system according to an embodiment of the present invention;
FIG. 7 is a schematic diagram of an apparatus according to an embodiment of the present invention; and
FIG. 8 is a schematic diagram of modules according to an embodiment of the present invention.

### DESCRIPTION OF EMBODIMENTS

To describe the objectives, technical solutions and merits of embodiments of the present invention more clearly, the following further describes the present invention with reference to the accompanying drawings and embodiments. It should be understood that the specific embodiments described here are only to illustrate the present invention, and are not intended to limit the present invention. Embodiments of the present invention include a method and an apparatus for controlling a network device. The method included in embodiments of the present invention may be implemented by a hardware device such as a general computer or a network server.

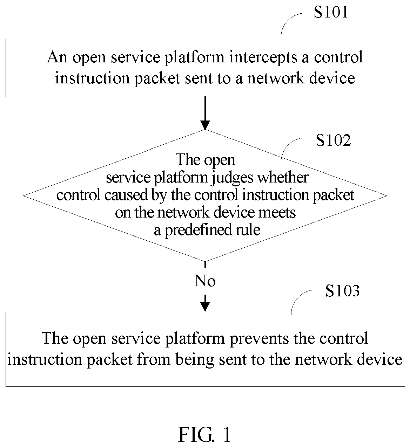

According to an embodiment of the present invention, as shown in FIG. 1, a method for controlling a network device includes: S101, an open service platform intercepts a first control instruction packet sent to a network device; S102, the open service platform judges whether control caused by the first control instruction packet on the network device meets a predefined rule; and S103, if the control does not meet the predefined rule, the open service platform prevents the first control instruction packet from being sent to the network device.

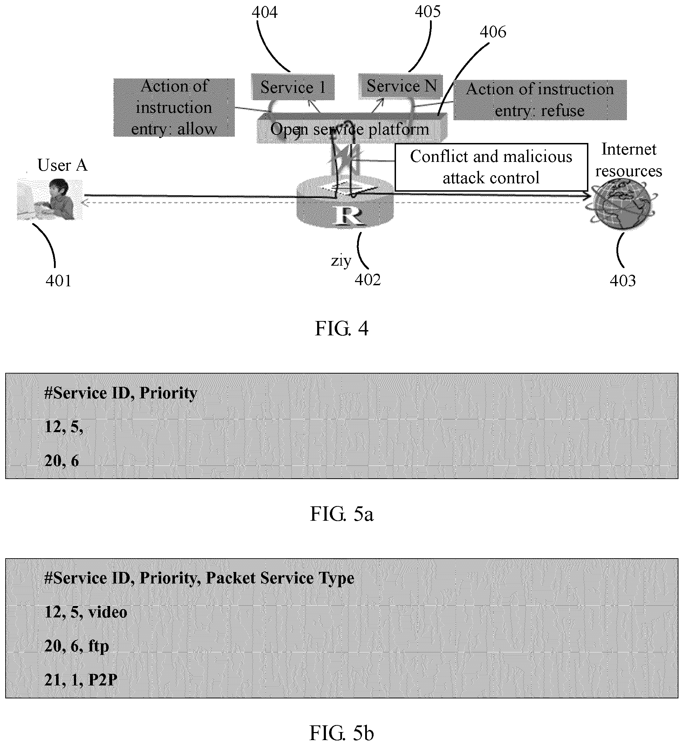

FIG. 4 shows an application scenario of the present invention, where a user A (401) accesses internet resources 403 through an internet (internet) device. Various requests of the user A arrive at a network device, an example of the network device is a router 402 shown in the lower part of FIG. 4. Requests of a user are sent to an open service platform 406. The various requests may be voice, video streaming downloading, accessing the internet and even attacking internet servers maliciously. The open service platform 406 identifies and classifies the requests of the user, for example, voice enhancement services, video enhancement services, bandwidth control services, and the like. A device for implementing the above functions of the open service platform 406 is an apparatus for controlling a network device disclosed in the present invention. The apparatus implements the controlling method disclosed in the present invention, thus control instructions not meeting the predefined rule can be filtered.

Optionally, according to an embodiment of the present invention, the judging whether control caused by the first control instruction packet on the network device meets the predefined rule may be: judging whether the control caused by the first control instruction packet on the network device has authorization.

Further, optionally, according to an embodiment of the present invention, the judging whether control caused by the first control instruction packet on the network device meets the predefined rule may include:
acquiring a service identifier (ID) corresponding to the first control instruction packet;
judging whether a service corresponding to the first control instruction packet has authorization by utilizing an authorized service ID list; and
determining that the control caused by the first control instruction packet on the network device does not meet the predefined rule if the service corresponding to the first control instruction packet does not have the authorization.

Optionally, according to an embodiment of the present invention, the judging whether control caused by the first control instruction packet on the network device meets the predefined rule may be: judging whether the control caused by the first control instruction packet on the network device is in conflict with control caused by a control instruction packet intercepted by the open service platform prior to the first control instruction packet on the network device.

For convenience of expression, the control instruction packet is called a first control instruction packet, and a control instruction packet intercepted by the open service platform prior to the control instruction packet is called a second control instruction packet.

Further, optionally, according to an embodiment of the present invention, priority of the first control instruction packet is compared with priority of the second control instruction packet if the control caused by the first control instruction packet on the network device is in conflict with the control caused by the second control instruction packet on the network device.

If the priority of the first control instruction packet is lower than the priority of the second control instruction packet, it is determined that control caused by the control instruction packet on the network device does not meet the predefined rule.

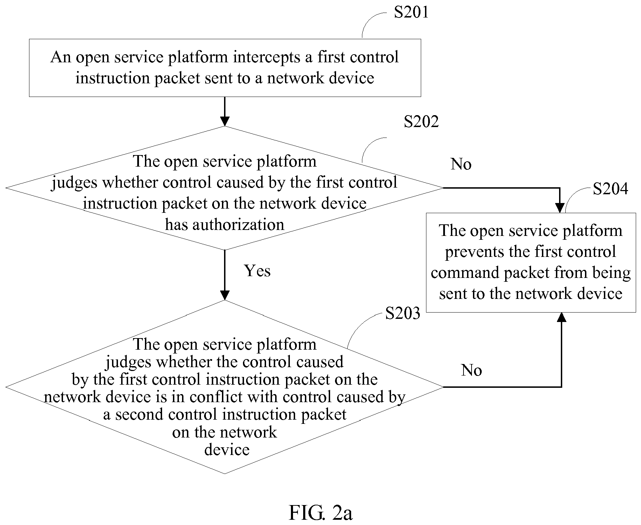

Optionally, according to an embodiment of the present invention, as shown in FIG. 2a, in S201, the first control instruction packet sent to the network device is intercepted. In S202, it is judged whether the control caused by the first control instruction packet on the network device has authorization. If the control does not have the authorization, the process goes to S204 for preventing the first control instruction packet from being sent to the network device; and if the control has the authorization, the process goes to S203 for further judging whether the control caused by the first control instruction packet on the network device is in conflict with the control caused by the second control instruction packet on the network device. If the control caused by the first control instruction packet on the network device is in conflict with the control caused by the second control instruction packet on the network device, the process goes to S204 for preventing the first control instruction packet from being sent to the network device.

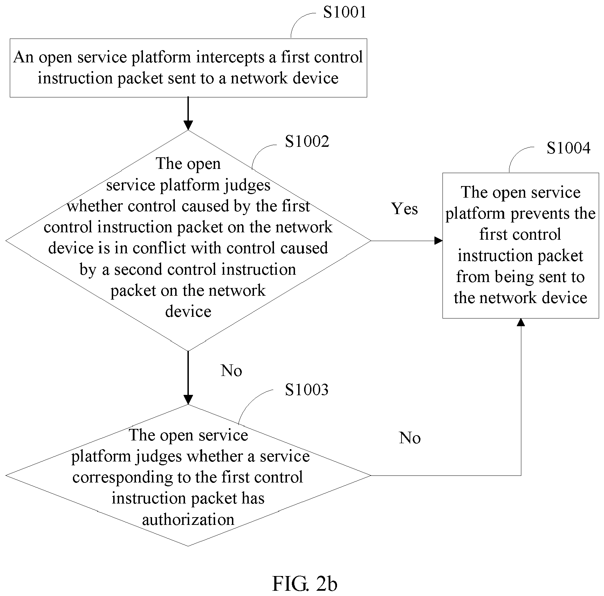

Optionally, according to an embodiment of the present invention, as shown in FIG. 2b, in S1001, the first control instruction packet sent to the network device is intercepted. In S1002, it is judged whether the control caused by the first control instruction packet on the network device is in conflict with the control caused by the second control instruction packet on the network device. If the control caused by the first control instruction packet is in conflict with the control caused by the second control instruction packet, the process goes to S1004 for preventing the first control instruction packet from being sent to the network device. If the control caused by the first control instruction packet is not in conflict with the control caused by the second control instruction packet, the process goes to S1003. In S1003, it is judged whether the service corresponding to the first control instruction packet has authorization. If the service does not have the authorization, the process goes to S1004 for preventing the first control instruction packet from being sent to the network device.

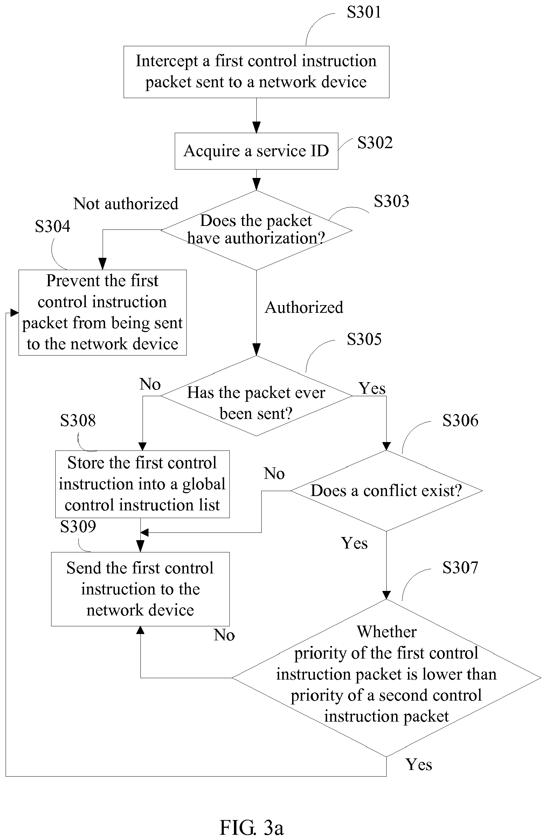

According to an embodiment of the present invention, as shown in FIG. 3a, in S301, the first control instruction packet sent to the network device is intercepted. In S302, a service identifier ID corresponding to the first control instruction packet is acquired. The service ID is a serial number for the open service platform to deploy a service and is mainly used for identifying the service. The service ID may be an incremental number, such as 1, 2, 3, 4, 5.... For example, service 1 is a video enhancement service, service 2 is a voice enhancement service, and service 3 is a green internet service. Authorization of the services 1, 2 and 3 may be as follows: service 1 allows control on video packets; service 2 allows control on voice packets; and service 3 allows control on Hypertext Transfer Protocol http (Hypertext Transfer Protocol) packets, and the like. In S303, it is judged whether the service corresponding to the first control instruction packet has authorization according to the ID list of authorized services.

According to an embodiment of the present invention, the ID list of authorized services may be represented as a service authority configuration file. Therefore, in S303, the service authority configuration file may be utilized to judge whether the service corresponding to the first control instruction packet has the authorization. As shown in FIG. 5a, the service authority configuration file may include the service ID and priority. The service ID is unique on the open service platform and is a unique identifier of a service. Only when the service ID is in the service authority configuration file, a control instruction of the service can be sent to the network device through the open service platform. If the service ID is not in the service authority configuration file, the service is not authorized to send down a network device control instruction. The priority is used for representing an authority level for controlling the network device of the service, and the priority is an integer; preferably, the smaller the value is, the higher the priority is.

Optionally, the service authority configuration file can be set to be more complex. For example, packet service type can be added so as to indicate which service types of data packets can be processed by the service and send control instructions to the network device in regard to services. As shown in FIG. 5b, a packet service type corresponding to a service with a service ID of 12 is video and authorization of the service with a service ID of 12 is to control video; if a control instruction sent by the service with a service ID of 12 to the network device is to control uploading of ftp (File Transfer Protocol) data packets, the control instruction is considered as an unauthorized control instruction. Likewise, an authorized authority of a service with a service ID of 20 is to control ftp data packets; if a control instruction sent by the service with a service ID of 20 to the network device is to control point-to-point P2P data packets, the control instruction is considered as an unauthorized control instruction.

The authorized service ID list includes authorized authorities corresponding to each service; for example, the authorized authority of the service with a service ID of 20 is to control the ftp data packets.

If the judging result in S303 is that the service corresponding to the first control instruction packet does not have the authorization, in S304, the first control instruction packet is prevented from being sent to the network device. Optionally, error information is sent to a sender of the first control instruction packet after the first control instruction packet is prevented from being sent to the network device.

If the judging result in S303 is that the service corresponding to the first control instruction packet has the authorization, in S305, a global control instruction list is traversed to judge whether the first control instruction packet has ever been sent, where the global control instruction list is a list including sent control instruction packets. If the judging result in S305 is that the first control instruction packet has not been sent, in S308, the first control instruction packet is stored into the global control instruction list. In S309, the first control instruction packet is sent to the network device. In S310, the sub-process ends.

If the judging result in S305 is that the first control instruction packet has ever been sent, in S306, it is judged whether the control caused by the first control instruction packet on the network device is in conflict with the control caused by the second control instruction packet on the network device. For example, for a data packet of a video watched online, if the first control instruction packet is an instruction for ensuring bandwidth whereas the second control instruction packet is an instruction for preventing watching, a conflict exits between controls caused by the two control instruction packets on the network device. If the judging result in S306 is that the controls are not in conflict with each other, the process goes to S309 for sending the first control instruction packet to the network device. If the judging result in S306 is that the controls are in conflict with each other, in S307, the priority of the first control instruction packet is compared with the priority of the second control instruction packet. If the priority of the first control instruction packet is lower than the priority of the second control instruction packet, the process goes to S304 for preventing the first control instruction packet from being sent to the network device. If the priority of the first control instruction packet is not lower than the priority of the second control instruction packet, the process goes to S309 for sending the first control instruction packet to the network device.

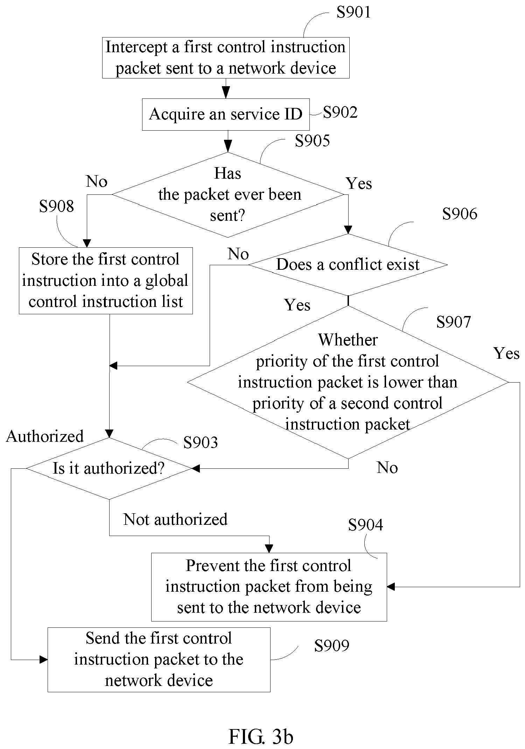

According to another embodiment of the present invention, as shown in FIG. 3b, in S901, the first control instruction packet sent to the network device is intercepted. In S902, a service ID is acquired. In S905, a sent global control instruction list is traversed to judge whether the first control instruction packet has ever been sent. If the first control instruction packet has ever been sent, in S906, it is judged whether the control caused by the first control instruction packet on the network device is in conflict with the control caused by the second control instruction packet on the network device. If the first control instruction packet has not been sent, in S908, the first control instruction packet is stored into the global control instruction list, and the process goes to S903.

If the judging result in S906 is that the controls are in conflict with each other, the process goes to S907 for comparing the priority of the first control instruction packet and the priority of the second control instruction packet. If the priority of the first control instruction packet is lower than the priority of the second control instruction packet, the process goes to S904 for preventing the first control instruction packet from being sent to the network device. If the priority of the first control instruction packet is not lower than the priority of the second control instruction packet, the process goes to S903 for judging whether the first control instruction packet has authorization. If the judging result in S906 is that no conflicts exist between the controls, the process goes to S903.

In S903, it is judged whether the first control instruction packet has the authorization according to a service authority configuration file. If the first control instruction packet does not have the authorization, the process goes to S904 for preventing the first control instruction packet from being sent to the network device. Optionally, error information may be sent to the sender of the first control instruction packet after the first control instruction packet is prevented from being sent to the network device. If the first control instruction packet has the authorization, in S909, the first control instruction packet is sent to the network device.

By adopting the method according to embodiments of the present invention, conflict judgment is performed firstly, and then the authorization judgment is performed, therefore, redundant authorization judgments can be reduced and, thus, the operating process is quickened.

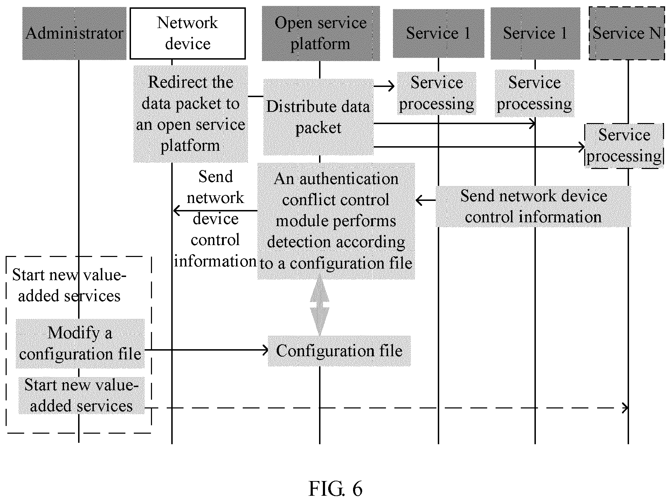

Optionally, the method of the present invention further includes: providing a network interface platform for an administrator of the open service platform. The administrator may change the authorized service ID list such as the service authority configuration file used by the open service platform at any time according to the demand of service deployment. The service authority configuration file may also include the predefined rules applied in S102, so as to make newly-added service configuration file items to meet deployment demands of newly-added services or change priority of deployed service. As shown in FIG. 6, the administrator may start the new-added services and set parameters such as service ID, authority and priority for the new-added services in the configuration file.

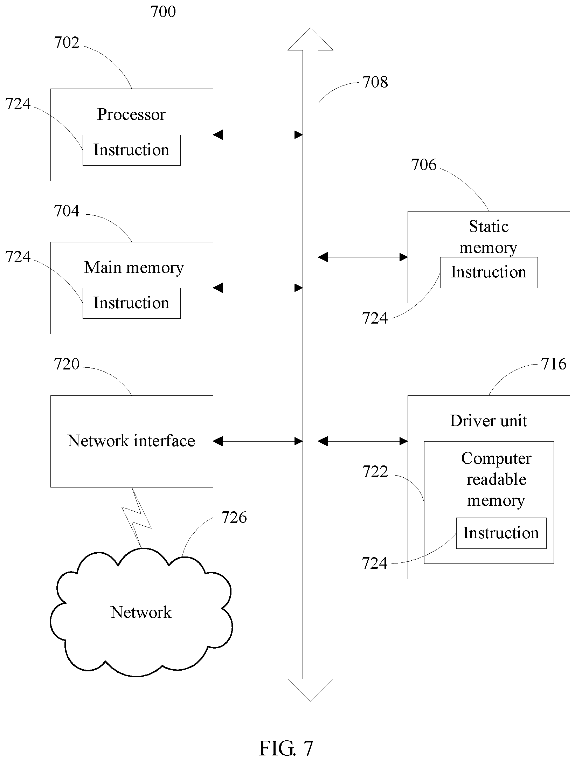

FIG. 7 is a simplified example of an apparatus for implementing the method of the present invention and the apparatus can execute the method of the present invention. Optionally, the apparatus may be connected to other apparatuses through, for example, the network connection. The apparatus may execute a series of instructions in sequence or in parallel. Besides, although only one apparatus is shown in FIG. 7, it should be understand that the "apparatus" can be interpreted as a single apparatus or a set of a plurality of apparatuses for executing the method of the present invention.

The apparatus 700 includes a processor 702 (such as a central processing unit CPU). The processor 702 may execute functions such as calculation, selection or comparison, for example, S303, S305 and S306 included in the method of the present invention. A main memory 704 may store parameters relevant to the method of the present invention, for example, a service authority configuration file and/or a global internal control instruction list, and the like. A static memory 706 may also store parameters relevant to the method of the present invention, for example, a global internal control instruction list, and the like. The processor 702, the main memory 704 and the static memory 706 are communicated by using a bus 708. The apparatus 700 may further include a disc driver unit 710 and a network interface apparatus 712. The disc driver unit 710 may also store parameters relevant to the method of the present invention, for example, a global internal control instruction list, and the like. The network interface device 712 can make the apparatus 700 to be capable of communicating with the outside, for example, intercepting the control instruction packet sent to the network device in step S201 and sending the control instruction to the network device in step S309.

The disc driver unit 710 includes a machine-readable medium 722, where the machine-readable medium 722 stores more than one internal control instructions, and a data structure 724 (for example, a software) for executing the method of the present invention. The internal control instructions may also be partially or completely stored in the main memory 704 or the processor 702. The foregoing machine-readable medium may also include the internal control instructions and the main memory 704. In addition, the internal control instructions may be transmitted to or received from a network side 726 through the network interface device 712 by using existing communication protocols.

The machine-readable medium 722 may include a single medium or multiple mediums (for example, centralized or distributed database or related cache) for storing the instructions. A term "machine-readable medium" may also be understood as any storing, coding or bearing medium of instructions which are carried out by a machine and are capable of implementing the instructions of the method of the present invention. The term "machine-readable medium" may also be understood as including a solid-state memory and an optomagnetic medium.

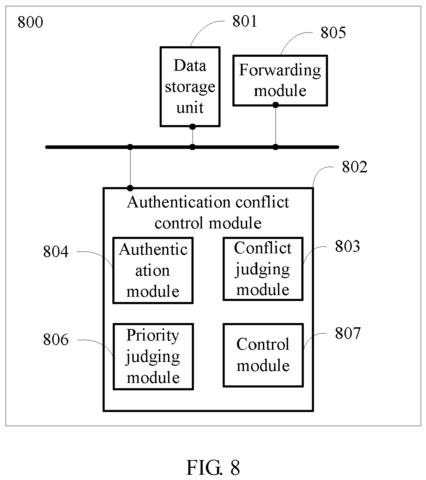

According to an embodiment of the present invention, an apparatus for controlling a network device is shown in FIG. 8. An apparatus 800 includes a data storage unit 801 and an authentication conflict control module 802. The data storage unit 801 is configured to store an intercepted first control instruction packet sent to a network device and a predefined rule. The authentication conflict control module 802 is capable of communicating with the data storage unit 801 and the authentication conflict control module 802 is configured to read the first control instruction packet and the predefined rule from the data storage unit 801, and judge whether control caused by the first control instruction packet on the network device meets the predefined rule according to the predefined rule. If the control caused by the first control instruction packet does not meet the predefined rule, the authentication conflict control module 802 prevents the first control instruction packet from being sent to the network device.

Optionally, the authentication conflict control module 802 may further include an authentication module 804, a conflict judging module 803, a priority judging module 806 and a control module 807. The authentication module 804 is configured to judge whether the control caused by the first control instruction packet on the network device has authorization. The conflict judging module 803 is configured to judge whether the control caused by the first control instruction packet on the network device is in conflict with control caused by a second control instruction packet on the network device. When the conflict judging module 803 judges that the control caused by the first control instruction packet on the network device is in conflict with the control caused by the second control instruction packet on the network device, the priority judging module 806 is configured to judge whether priority of the first control instruction packet is lower than priority of the second control instruction packet. When the authentication module 804 judges that the control caused by the first control instruction packet on the network device does not have the authorization or the priority judging module 806 judges that the priority of the first control instruction packet is lower than the priority of the second control instruction packet, the control module 807 is configured to prevent the first control instruction packet from being sent to the network device.

Optionally, the data storage unit 801 may be further configured to store an authorized service ID list. The authentication module 804 reads the authorized service ID list from the data storage unit 801 and judges whether a service corresponding to the first control instruction packet has authorization.

Optionally, the data storage unit 801 may be further configured to store a global control instruction list. The conflict judging module 803 reads the global control instruction list from the data storage unit 801 and judges whether the control caused by the first control instruction packet on the network device is in conflict with the control caused by the second control instruction packet on the network device.

Optionally, in the embodiment of the present invention, it is possible that the conflict judging module 803 is triggered after the authentication module 804 determines that the service corresponding to the first control instruction packet has the authorization; it is also possible that the authentication module 804 is triggered after the conflict judging module 803 determines that the control caused by the first control instruction packet on the network device is not in conflict with the control caused by the second control instruction packet on the network device; and it is also possible that the authentication module 804 is triggered after the priority judging module 806 judges that the priority of the first control instruction packet is not lower than the priority of the second control instruction packet.

Further optionally, the apparatus 800 may further include a forwarding module 805. The forwarding module 805 is configured to forward the first control instruction to the network device when the authentication conflict control module 802 judges that the control caused by the first control instruction packet on the network device meets the predefined rule.

For example, the conflict judging module 803 is triggered after the authentication module 804 determines that the service corresponding to the first control instruction packet has the authorization; if the judging result of the conflict judging module 803 is that the control caused by the first control instruction packet on the network device is in conflict with the control caused by the second control instruction packet on the network device, the priority judging module 806 compares the priority of the first control instruction packet with the priority of the second control instruction packet in further; and if the priority of the first control instruction packet is not lower than the priority of the second control instruction packet, the forward module 805 is triggered and the forward module 805 forwards the first control instruction packet to the network device.

Through the above descriptions of the embodiments, persons of ordinary skill in the art may clearly know that embodiments of the present invention may be realized by means of software and necessary general hardware platform; of course, the embodiments may also be realized through hardware. Based on such understanding, the technical solutions of embodiments of the present invention may be shown in the form of software products; the software products may be stored in a storage medium such as a ROM/RAM, a magnetic disk and an optical disk, and include a plurality of instructions for enabling a computer device, or a server, or other network devices to perform the methods described in each embodiment of the present invention or the methods described in certain parts of embodiments of the present invention.

The aboves are only preferable embodiments of the present invention, and are not used to limit the protection scope of the present invention. Any modification, equivalent replacement, improvement, and the like, made within the principle of the present invention shall be included in the protection scope of the present invention.

## Claims

1. A method for controlling a network device, comprising:
intercepting (301), by an apparatus for controlling a network device, a first control instruction packet sent to the network device;
acquiring (302), by an apparatus for controlling a network device, a service identifier ID corresponding to the first control instruction packet;
judging (303), by the apparatus for controlling a network device, whether the service corresponding to the first control instruction packet is an authorized service according to whether the acquired service ID is in a list of authorized services;
if no, preventing (304), by the apparatus for controlling the network device, the first control instruction packet from being sent to the network device;
if yes, traversing (305), by the apparatus for controlling the network device, a global control instruction list to judge whether the first control instruction packet has ever been sent, where the global control instruction list is a list comprising sent control instruction packets;
if no, storing (308), by the apparatus for controlling the network device, the first control instruction packet into the global control instruction list, and sending (309) the first control instruction packet to the network device;
if yes, judging (306), by the apparatus for controlling the network device, whether the service corresponding to the first control instruction packet on the network device is in conflict with a service corresponding to a second control instruction packet on the network device;
wherein the second control instruction packet has been intercepted prior to the first control instruction packet;
if no, sending (309), by the apparatus for controlling the network device, the first control instruction packet to the network device;
if yes, comparing (307) priority of the first control instruction packet with priority of the second control instruction packet, and
preventing (304), by the apparatus for controlling the network device, the first control instruction packet from being sent to the network device, if the priority of the first control instruction packet is lower than the priority of the second control instruction packet;
sending (309), by the apparatus for controlling the network device, the first control instruction packet to the network device, if the priority of the first control instruction packet is not lower than the priority of the second control instruction packet.

2. An apparatus for controlling a network device (800), comprising a data storage unit (801), a conflict judging module (803), an authentication module (804), a forwarding module (805), a priority judging module (806) and a control module (807); wherein
the data storage unit (801) is configured to store an intercepted first control instruction packet sent to the network device;
the authentication module (804) is configured to:
acquire a service identifier ID corresponding to the first control instruction packet;
judge whether the service corresponding to the first control instruction packet is an authorized service according to whether the acquired service ID is in a list of authorized services;
if no, the control module (807) is configured to prevent the first control instruction packet from being sent to the network device;
if yes, traverse a global control instruction list to judge whether the first control instruction packet has ever been sent, where the global control instruction list is a list comprising sent control instruction packets;
if no, the data storage unit (801) is further configured to store the first control instruction packet into the global control instruction list and the forwarding module (805) is configured to forward the first control instruction packet to the network device;
if yes, the conflict judging module (803) is configured to judge whether the service corresponding to the first control instruction packet on the network device is in conflict with a service corresponding to a second control instruction packet on the network device;
wherein the second control instruction packet has been intercepted prior to the first control instruction packet;
if no, the forwarding module (805) is configured to forward the first control instruction packet to the network device;
if yes, the priority judging module (806) is configured to compare priority of the first control instruction packet with priority of the second control instruction packet;
the control module (807) is configured to prevent the first control instruction packet from being sent to the network device, if the priority of the first control instruction packet is lower than the priority of the second control instruction packet;
the forwarding module (805) is configured to forward the first control instruction packet to the network device, if the priority of the first control instruction packet is not lower than the priority of the second control instruction packet.

## Patentansprüche

1. Verfahren zur Steuerung einer Netzwerkvorrichtung, das Folgendes umfasst:
Abfangen (301), durch eine Vorrichtung zur Steuerung einer Netzwerkvorrichtung, eines an die Netzwerkvorrichtung gesendeten ersten Steueranweisungspakets;
Erfassen (302), durch eine Vorrichtung zur Steuerung einer Netzwerkvorrichtung, einer Dienstkennung, ID, entsprechend dem ersten Steueranweisungspaket;
Beurteilen (303), durch die Vorrichtung zur Steuerung einer Netzwerkvorrichtung, ob der Dienst entsprechend dem ersten Steueranweisungspaket ein autorisierter Dienst ist, je nachdem, ob eine erfasste Dienst-ID in einer Liste von autorisierten Diensten ist;
wenn nein, Verhindern (304), durch die Vorrichtung zur Steuerung einer Netzwerkvorrichtung, dass das erste Steueranweisungspaket an die Netzwerkvorrichtung gesendet wird;
wenn ja, Durchlaufen (305), durch die Vorrichtung zur Steuerung einer Netzwerkvorrichtung, einer globalen Steueranweisungsliste zum Beurteilen, ob das erste Steueranweisungspaket jemals gesendet wurde, wobei die globale Steueranweisungsliste eine Liste ist, die gesendete Steueranweisungspakete umfasst;
wenn nein, Speichern (308), durch die Vorrichtung zur Steuerung einer Netzwerkvorrichtung, des ersten Steueranweisungspakets in der globalen Steueranweisungsliste und Senden (309) des ersten Steueranweisungspakets an die Netzwerkvorrichtung;
wenn ja, Beurteilen (306), durch die Vorrichtung zur Steuerung einer Netzwerkvorrichtung, ob der Dienst entsprechend dem ersten Steueranweisungspaket auf der Netzwerkvorrichtung im Konflikt mit einem Dienst entsprechend einem zweiten Steueranweisungspaket auf der Netzwerkvorrichtung ist;
wobei das zweite Steueranweisungspaket vor dem ersten Steueranweisungspaket abgefangen wurde;
wenn nein, Senden (309), durch die Vorrichtung zur Steuerung einer Netzwerkvorrichtung, des ersten Steueranweisungspakets an die Netzwerkvorrichtung;
wenn ja, Vergleichen (307) der Priorität des ersten Steueranweisungspakets mit der Priorität des zweiten Steueranweisungspakets, und
Verhindern (304), durch die Vorrichtung zur Steuerung einer Netzwerkvorrichtung, dass das erste Steueranweisungspaket an die Netzwerkvorrichtung gesendet wird, wenn die Priorität des ersten Steueranweisungspakets niedriger als die Priorität des zweiten Steueranweisungspakets ist;
Senden (309), durch die Vorrichtung zur Steuerung einer Netzwerkvorrichtung, des ersten Steueranweisungspakets an die Netzwerkvorrichtung, wenn die Priorität des ersten Steueranweisungspakets nicht niedriger als die Priorität des zweiten Steueranweisungspakets ist.

2. Vorrichtung zur Steuerung einer Netzwerkvorrichtung (800), umfassend eine Datenspeichereinheit (801), ein Konfliktbeurteilungsmodul (803), ein Authentifizierungsmodul (804), ein Weiterleitungsmodul (805), ein Prioritätsbeurteilungsmodul (806) und ein Steuermodul (807); wobei
die Datenspeichereinheit (801) dazu ausgelegt ist, ein an die Netzwerkvorrichtung gesendetes erstes Steueranweisungspaket abzufangen;
wobei das Authentifizierungsmodul (804) ausgelegt ist zum:
Erfassen einer Dienstkennung, ID, entsprechend dem ersten Steueranweisungspaket;
Beurteilen, ob der Dienst entsprechend dem ersten Steueranweisungspaket ein autorisierter Dienst ist, je nachdem, ob eine erfasste Dienst-ID in einer Liste von autorisierten Diensten ist;
wenn nein, ist das Steuermodul (807) dazu ausgelegt zu verhindern, dass das erste Steueranweisungspaket an die Netzwerkvorrichtung gesendet wird;
wenn ja, Durchlaufen einer globalen Steueranweisungsliste zum Beurteilen, ob das erste Steueranweisungspaket jemals gesendet wurde, wobei die globale Steueranweisungsliste eine Liste ist, die gesendete Steueranweisungspakete umfasst;
wenn nein, ist die Datenspeichereinheit (801) ferner dazu ausgelegt, das erste Steueranweisungspaket in der globalen Steueranweisungsliste zu speichern, und das Weiterleitungsmodul (805) ist dazu ausgelegt, das erste Steueranweisungspaket an die Netzwerkvorrichtung weiterzuleiten;
wenn ja, ist das Konfliktbeurteilungsmodul (803) dazu ausgelegt zu beurteilen, ob der Dienst entsprechend dem ersten Steueranweisungspaket auf der Netzwerkvorrichtung im Konflikt mit einem Dienst entsprechend einem zweiten Steueranweisungspaket auf der Netzwerkvorrichtung ist;
wobei das zweite Steueranweisungspaket vor dem ersten Steueranweisungspaket abgefangen wurde;
wenn nein, ist das Weiterleitungsmodul (805) dazu ausgelegt, das erste Steueranweisungspaket an die Netzwerkvorrichtung weiterzuleiten;
wenn ja, ist das Prioritätsbeurteilungsmodul (806) dazu ausgelegt, die Priorität des ersten Steueranweisungspakets mit der Priorität des zweiten Steueranweisungspakets zu vergleichen;
das Steuermodul (807) ist dazu ausgelegt zu verhindern, dass das erste Steueranweisungspaket an die Netzwerkvorrichtung gesendet wird, wenn die Priorität des ersten Steueranweisungspakets niedriger als die Priorität des zweiten Steueranweisungspakets ist;
das Weiterleitungsmodul (805) ist dazu ausgelegt, das erste Steueranweisungspaket an die Netzwerkvorrichtung weiterzuleiten, wenn die Priorität des ersten Steueranweisungspakets nicht niedriger als die Priorität des zweiten Steueranweisungspakets ist.

## Revendications

1. Procédé pour commander un dispositif de réseau, consistant :
à intercepter (301), au moyen d'un appareil pour commander un dispositif de réseau, un premier paquet d'instruction de commande envoyé au dispositif de réseau ;
à acquérir (302), au moyen d'un appareil pour commander un dispositif de réseau, un identifiant (ID) de service correspondant au premier paquet d'instruction de commande ;
à évaluer (303), au moyen de l'appareil pour commander un dispositif de réseau, si le service correspondant au premier paquet d'instruction de commande est un service autorisé selon que l'identifiant de service acquis se trouve dans une liste de services autorisés ;
si tel n'est pas le cas, à empêcher (304), au moyen de l'appareil pour commander le dispositif de réseau, le premier paquet d'instruction de commande d'être envoyé au dispositif de réseau ;
si tel est le cas, à parcourir (305), au moyen de l'appareil pour commander le dispositif de réseau, une liste globale d'instructions de commande pour évaluer si le premier paquet d'instruction de commande a déjà été envoyé, où la liste globale d'instructions de commande est une liste comportant des paquets d'instruction de commande ;
si tel n'est pas le cas, à stocker (308), au moyen de l'appareil pour commander le dispositif de réseau, le premier paquet d'instruction de commande dans la liste globale d'instructions de commande, et à envoyer (309) le premier paquet d'instruction de commande au dispositif de réseau ;
si tel est le cas, à évaluer (306), au moyen de l'appareil pour commander le dispositif de réseau, si le service correspondant au premier paquet d'instruction de commande sur le dispositif de réseau est en conflit avec un service correspondant à un second paquet d'instruction de commande sur le dispositif de réseau ;
dans lequel le second paquet d'instruction de commande a été intercepté avant le premier paquet d'instruction de commande ;
si tel n'est pas le cas, à envoyer (309), au moyen de l'appareil pour commander le dispositif de réseau, le premier paquet d'instruction de commande au dispositif de réseau ;
si tel est le cas, à comparer (307) une priorité du premier paquet d'instruction de commande avec une priorité du second paquet d'instruction de commande, et
à empêcher (304), au moyen de l'appareil pour commander le dispositif de réseau, le premier paquet d'instruction de commande d'être envoyé au dispositif de réseau si la priorité du premier paquet d'instruction de commande est plus faible que la priorité du second paquet d'instruction de commande ;
à envoyer (309), au moyen de l'appareil pour commander le dispositif de réseau, le premier paquet d'instruction de commande au dispositif de réseau si la priorité du premier paquet d'instruction de commande n'est pas plus faible que la priorité du second paquet d'instruction de commande.

2. Appareil pour commander un dispositif de réseau (800), comprenant une unité de stockage de données (801), un module d'évaluation de conflit (803), un module d'authentification (804), un module d'expédition (805), un module d'évaluation de priorité (806) et un module de commande (807) ; dans lequel
l'unité de stockage de données (801) est configurée pour stocker un premier paquet d'instruction de commande intercepté envoyé au dispositif de réseau ;
le module d'authentification (804) est configuré :
pour acquérir un identifiant (ID) de service correspondant au premier paquet d'instruction de commande ;
pour évaluer si le service correspondant au premier paquet d'instruction de commande est un service autorisé selon que l'identifiant de service acquis se trouve dans une liste de services autorisés ;
si tel n'est pas le cas, le module de commande (807) est configuré pour empêcher le premier paquet d'instruction de commande d'être envoyé au dispositif de réseau ;
si tel est le cas, pour parcourir une liste globale d'instructions de commande pour évaluer si le premier paquet d'instruction de commande a déjà été envoyé, où la liste globale d'instructions de commande est une liste comportant des paquets d'instruction de commande ;
si tel n'est pas le cas, l'unité de stockage de données (801) est en outre configurée pour stocker le premier paquet d'instruction de commande dans la liste globale d'instructions de commande, et le module d'expédition (805) est configuré pour expédier le premier paquet d'instruction de commande au dispositif de réseau ;
si tel est le cas, le module d'évaluation de conflit (803) est configuré pour évaluer si le service correspondant au premier paquet d'instruction de commande sur le dispositif de réseau est en conflit avec un service correspondant à un second paquet d'instruction de commande sur le dispositif de réseau ;
dans lequel le second paquet d'instruction de commande a été intercepté avant le premier paquet d'instruction de commande ;
si tel n'est pas le cas, le module d'expédition (805) est configuré pour expédier le premier paquet d'instruction de commande au dispositif de réseau ;
si tel est le cas, le module d'évaluation de priorité (806) est configuré pour comparer une priorité du premier paquet d'instruction de commande avec une priorité du second paquet d'instruction de commande, et
le module de commande (807) est configuré pour empêcher le premier paquet d'instruction de commande d'être envoyé au dispositif de réseau si la priorité du premier paquet d'instruction de commande est plus faible que la priorité du second paquet d'instruction de commande ;
le module d'expédition (805) est configuré pour expédier le premier paquet d'instruction de commande au dispositif de réseau si la priorité du premier paquet d'instruction de commande n'est pas plus faible que la priorité du second paquet d'instruction de commande.
